# EUROPEAN PATENT SPECIFICATION

(11) **EP 1 800 840 B1**
(45) Date of publication and mention of the grant of the patent: **01.10.2008**
(21) Application number: 05112454.3
(22) Date of filing: 20.12.2005
(51) Int. Cl.: B29C 70/34, B29C 70/46, B29D 31/00

(54) **A stiffening element and a method for manufacturing of a stiffening element**
Versteifungselement und Verfahren zu dessen Herstellung
Raidisseur et procédé pour sa fabrication

(43) Date of publication of application: 27.06.2007
(73) Proprietor: SAAB AB, 581 88 Linköping (SE)
(72) Inventor: RÄF, Martin, 585 92 LINKÖPING (SE)
(74) Representative: Winblad, Hans Peter

(56) References cited:
- EP-A- 1 151 850

## Description

### FIELD OF THE INVENTION

The present invention relates to a method for manufacturing of a stiffening element of composite material according to claim 1, and to a stiffening element obtainable by said method and also to a stiffening element structure and to a curved shell panel and a method of manufacturing thereof. The present invention relates, but not limited, to aircraft industry.

### BACKGROUND OF THE INVENTION

Methods of manufacture of composite materials using "prepreg" material (layer of fibre material previously impregnated with resin) exist today. When manufacturing of stiffening elements, such as aircraft ribs, frames etc., the composite material may have a curvature following a curved shell surface of a fuselage. It is today time-consuming to form an aircraft rib comprising a web and flanges of composite material. Manual work for application of prepreg material is required since it is difficult to provide that the fibre material follows the curvature of the rib or frame. Especially Z-shaped and Ω-shaped ribs of composite are difficult to manufacture since the fibre material tend to not follow the curvature.

EP-A-1 151 850 discloses a method for manufacturing a stiffening element of composite material, which method comprises providing a blank, which is folded along a first folding line being derived by an imaginary three-dimensional intersection line being derived from the radius of curvature of a curved surface onto which the stiffening element is to be attached.

EP 1 547 756 discloses a method of manufacturing C-shaped spars providing one type of fibre material being held in uncured resin material and a second type of fibre material not fully consolidated with resin material. The method disclosed may enable manufacturing times and costs to be reduced, but involves a complicated procedure and usage of fibre material to achieve the composite material.

The object of the present invention is to overcome the drawbacks of known techniques and to provide a solution which is not time-consuming regarding the manufacturing of stiffening elements, such as aircraft ribs etc. The solution has to imply a cost-effective manufactory of a stiffening element with a small building height relative the radius of the curved shell surface.

### SUMMARY OF THE INVENTION

This has been solved by a method being defined in the introduction, the method is characterised by the steps claimed in claim 1.

Thereby a plain blank of plastic layers (composite material) having a curved extension in the plane of the blank, can be used cost-effectively for producing composite material with a curvature following the curvature of the curved shell surface. The laying of plastic layers onto a flat blank building surface (creating a flat lay-up of plastic) is cost effective. The plastic material being curable, such as thermosetting resin. Each plastic layer preferably comprises reinforcement elements, for example carbon/glass or aramid fibres. Different layers may have fibres aligned in different directions. The outer flange or fixation flange is to be attached to the inner curved shell surface. By folding the flat blank along a three-dimensional folding line (the first folding line) the structure of the bank can be preserved without any wrinkles and discontinuous fibre directions of the blank.

For definition of the three-dimensional folding line one way is to create desired first and second point on a curved imaginary surface. A rotation line is defined between the first and second point. A rotation of the imaginary surface with a desired angle around the rotation line generates a rotated imaginary surface. A intersection line between the imaginary surface and the rotated imaginary surface is thereby achieved. The intersection line equals the three-dimensional folding line for folding the flat lay-up (the flat blank) for creating a fixation flange (first flange) and the web, wherein the fixation flange will have a curvature corresponding with the curvature of the curved shell surface and furthermore the blank (the stiffening clement) will have a curvature seen in a plane essentially faced to the curved shell surface.

The method comprises the step of providing a substantial flat blank of composite material; applying said blank on a forming surface of a forming tool; folding said blank along a first folding line, the curvature of which is defined by an imaginary three-dimensional intersection line being derived from the radius of curvature of the curved shell surface; curing said folded blank; and removing the stiffening element from the forming tool,

the method comprises the step of folding the blank along a second folding line essentially parallel with the first folding line forming an inner flange as defined in claim 1.

In such way an inner flange is provided which stabilizes the web and carries large bending loads. The inner flange can have a curvature parallel with the curvature of the outer flange (the fixation flange) or can have a slightly changed curvature in respect to the curvature of first folding line, thereby achieving that the web will have different angles relatively to the plane of the shell surface. This is advantageously when manufacturing other surfaces than single curved shell surfaces with stiffening elements, such as stiffening moderate double curved shell surfaces with stiffening elements. The curvature of above-mentioned curved imaginary surface having the first and second point defining a straight rotation line. To create an upper flange a midpoint is defined on the rotation line and between the first and second point. The midpoint is projected on the imaginary surface creating a first projection point normal to the rotation line. This first projecting point is thereafter translated normal to the imaginary surface, wherein a desired length of the web creates a second point. The imaginary surface is thereby transformed from the first projections point to the second point creating the flange surface.

The intersection curve between the flange surface and a web surface can be altered slightly to give new characteristics to the flange in respect to a local angle, the flange height and other characteristics, although these characteristics are connected thereto. For example, the flange surface may correspond with a surface such as the single curved shell surface or a moderate double curved surface. Such a moderate double curved surface is defined as surfaces with double curvature small enough to make it possible to wrap a flat lay-up on surface without wrinkling.

Preferably, the curvature of the curved shell surface is a single curved shell surface.

Alternatively, the curvature of the curved shell surface is a moderate double curved surface.

Suitably, the moderate double curved surface comprises surfaces including surfaces with double curvature small enough such that it is possible to wrap a flat blank (lay-up of plastic) on a tool surface without wrinkling the blank.

Preferably, the step of curing the formed blank is performed by sealing the blank in a vacuum bag, evacuating air from the vacuum bag, heating the folded blank by means of heating means, cooling the folded blank and removing the finished stiffening element from the vacuum bag.

Thereby the stiffening element can be finished (without or with eventual means for fastening the stiffening element to the curved shell surface) in a short time and in a labour saving manner, directly in the forming tool.

Suitably, the method of curing the formed blank comprises the step of compressing the blank in an autoclave.

In such way eventual air pockets between the layers can be minimized and limited to a certain predetermined extension.

Alternatively, the method of providing the essential flat blank of plastic layers is performed by an automatic tape lying machine (ATML), which comprises a moveable reel arrangement for applying layers, including elongated reinforcement elements, onto a plane surface side-by-side and on top of each other.

Thereby the manufacturing of stiffening elements of plastic can be cost-effective, since the laying of plastic layers on a plain blank building surface is possibly. There is no need of building a curved stiffening element "on the spot" in a forming tool. The manufacture is time-saving and the ATML-machine can be re-programmed for different types of blanks earmarked for a certain stiffening element dedicated for a certain aircraft type. Preferably, prepreg tapes including fibres that extend in the longitudinal direction of the blank may be cut into sections following a 0-line (the main direction of the curvature of the stiffening element). In a direction perpendicular to the 0-line and on the above mentioned sections, further sections of prepreg tape, including different extensions of fibres, are applied rapidly and accurately by means of the ATLM-machine, resulting in a fibre orientation in a direction essentially transverse (or +/- 45°) to the longitudinal direction of the blank. Other layers may have fibres aligned in different directions. These and other directions can be determined according to desired properties of the stiffening element for manufacture and being programmed into a control unit of the ATML-machine.

Preferably, the method of providing the blank of plastic layers is performed by hand onto an essential flat surface.

Thereby the manufacture of the stiffening element is time-saving since there is no need of building the stiffening element "on the spot".

Suitably, the method of providing the blank of plastic layers is performed in such way that the mean extension, a so called 0-line, of the blank will have a curvature corresponding essentially with the curved shell surface. This is material-saving.

This has also been solved by a stiffening element of composite material being defined in the introduction, the stiffening element being characterised by the features of claim 10.

In such way the stiffening element will have a low weight and considerable strength considering the small building height of the stiffening element relative the radius of the curvature of the curved shell surface. Since the blank of plastic layers being built up on a plain building surface and the curvature of the blank being predetermined from the radius of the inner shell surface, no excessive plastic material will be used (when building up a curved stiffening element according to prior art it is difficult to optimize the usage of plastic material).

Preferably, reinforcement fibres being comprised in the plastic extend continuously unbroken in the direction of curvature for each layer. Longitudinal fibres along the 0-line of the web essentially follow the curvature of the web. Since all positions of the stiffening element can have fibres with optimized directions for strength reasons, the weight of the stiffening element can be minimized.

Alternatively, a second folding line is provided between a second flange and the web, the second folding line has a radius of curvature essentially parallel with a radius of curvature of the first folding line, the surface of the second flange facing the curved shell surface essentially corresponds with the curvature of the curved shell surface.

This has also been solved by a stiffening element structure being defined in the introduction, wherein the stiffening element structure is defined in claim 12.

This has also been solved by a curved shell panel comprising a curved shell inner surface according to any of the claims 13-14 and by a manufacturing thereof according to the steps of any of the claims 15. At least two stiffening elements according any of claims 10 and 11 being attached to the curved shell inner surface.

Thereby the strength of the stiffening element is increased, since large bending loads are to be carried by the bracing means.

Thereby a curved shell panel is provided, which is cost-effective to produce.

Preferably, the curvature of the curved shell panel corresponds with a single curved shell surface.

Alternatively, the curved shell panel has a moderate double curved surface.

Thereby can cost effective panel parts in large aircrafts be made, even if the shell surface consists of a double curved surface, such as panels in the nose and tail segments of the aircraft.

The direction of the reinforcement fibres in each layer may be the same. Each layer may also have fibres oriented in any direction or several directions.

Alternatively, the manufacturing of the curved shell panel is performed by providing an essential flat blank of composite material; applying the blank on a forming surface of a forming tool; folding the blank along a first folding line in a first and a second plane, the folding in said first plane has a varying folding direction essentially corresponding with the radius of the curvature of the curved shell surface and the folding in the second plane has a varying folding direction corresponding with the folding in the first plane; curing the folded blank; removing the stiffening element from the forming tool; and attaching the at least two stiffening elements to the curved shell surface.

### BRIEF DESCRIPTION OF THE DRAWINGS

The present invention will now be described by way of example with reference to the accompanying schematic drawings of which:
FIGS. 1a-1b illustrate a perspective view of a stiffening element and a blank according to a first embodiment of the present invention;
FIGS. 2a-2d illustrate cross sections of stiffening elements with different profiles;
FIG. 2e is a blank adapted for a second embodiment shown in FIG. 2c;
FIGS. 3a-3b illustrate an aircraft door including the embodiment shown in FIG. 1 forming a stiffening element structure;
FIG. 4 is a part of a forming tool for forming and curing a stiffening element according to the first embodiment;
FIG. 5 is a perspective view of a stiffening element according to a third embodiment of the present invention;
FIGS. 6a-6b illustrate different stiffening element structures;
FIG. 7a-7b illustrate a tape lying reel of an automatic tape laying machine; and
FIG. 8a-8d illustrate a way of creating geometrical compensated surfaces.

### DETAILED DESCRIPTION OF THE PREFERRED EMBODIMENTS

Hereinafter, embodiments of the present invention will be described in detail with reference to the accompanying drawings related to embodiments, wherein for the sake of clarity and understanding of the invention some details of no importance are deleted from the drawings.

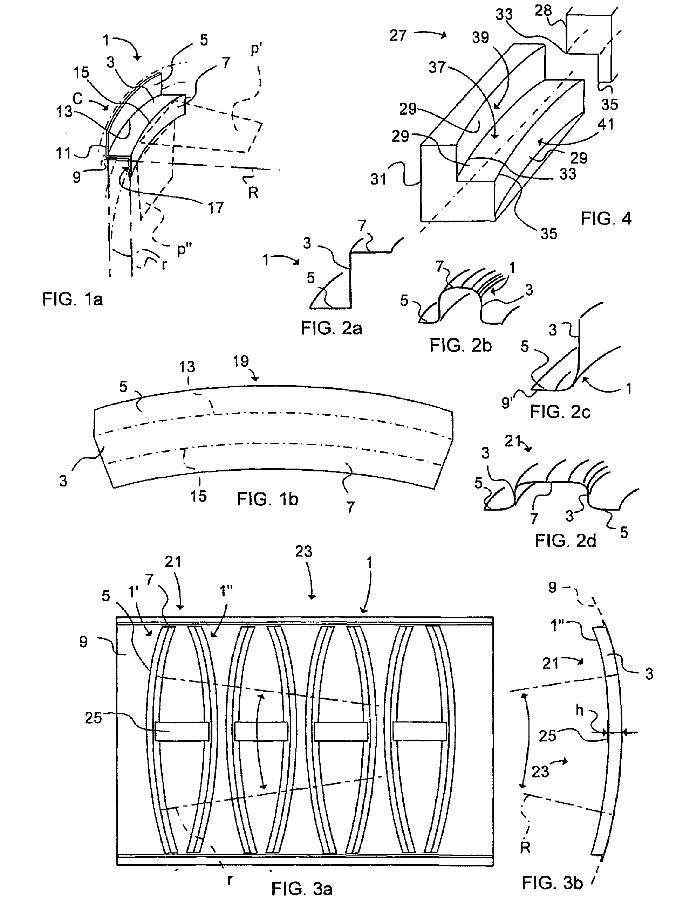

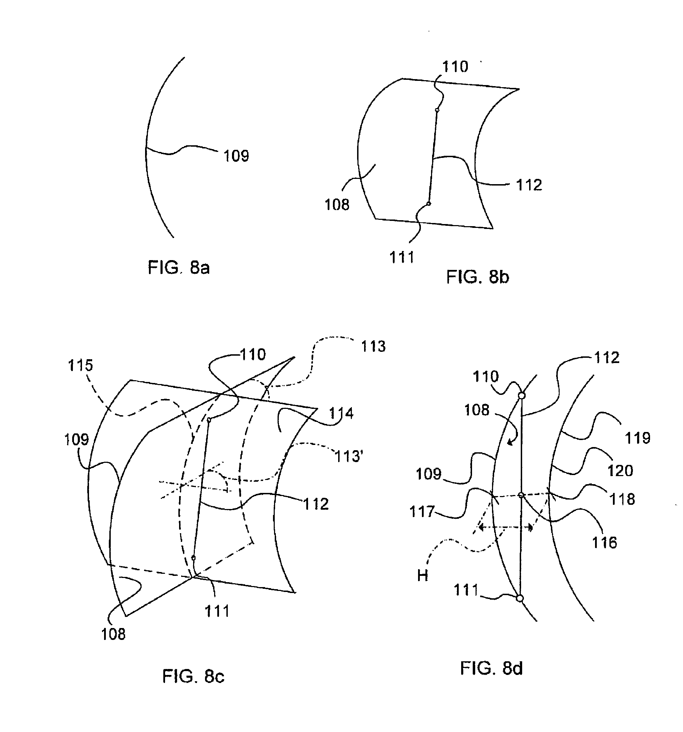

Referring to FIG. 1a, a stiffening element 1 of composite material, such as thermosetting resin, comprises a web 3 and an outer 5 (first flange or fixation flange) and inner 7 (second flange or free flange) flange according to a first embodiment, The outer flange 5 is provided for attachment to a single curved shell surface 9. An outer surface 11 of the outer flange 5 has a radius R of curvature corresponding with the radius of the curvature of the single curved shell surface 9. The inner flange 7 has a curvature parallel with the curvature of the outer flange 5. A first folding line 13 is provided between the outer flange 5 and the web 3. A second folding line 15 is provided between the inner flange 7 and the web 3. The second folding line 15 has a radius of curvature parallel with the radius of curvature of the first folding line 13. The extension of the outer flange 5 is parallel with the extension of the inner flange 7. The curvature of a surface 17 of the inner flange 7 facing the curved shell surface 9 essentially corresponds with the curvature of the curved shell surface 9 (that is the inner surface of the shell). The second folding line 15 has in a first plane p' a varying folding direction corresponding essentially with the radius R of the curved shell surface 9 and has a varying folding direction corresponding with the radius r of the curvature in a second plane p". The first folding line 13 has in the first plane p' a varying folding direction correlating with the second folding line 15 in the first plane p'. The second folding line 15 has in the first plane p' a varying folding direction correlating with the varying folding direction of the first folding line 13 in the first plane p'. That is, an intersection line can be defined as is described further below in correspondence with the FIGS. 8a-8d, wherein the first folding line is an extension between the curved shell surface 9 and the same surface imaginary rotated with a desired angle, wherein said angle corresponds to a desired angel of the web 3. The intersection line equals a three-dimensional folding line (the first folding line 13) for folding a flat blank of composite material into said stiffening element. The curved shell surface is in this embodiment a single curved shell surface 9.

The relationship of curvatures is explained further below. If the curvature of the curved shell surface for example is a radius, the intersection line (first folding line) will have a varying folding direction corresponding to an ellipse. The curved shell surface may not have just one radius, but can have a curvature with several different radii.

FIG. 1b illustrates a substantial flat blank 19 comprising plastic layers including carbon fibres (not shown). With dashed and dotted lines are the first 13 and second 15 folding lines marked. The blank 19 is used for manufacturing (by curving or folding it along the folding lines) of the stiffening element in FIG. 1a. Notably, the first 13 and second 15 folding lines have the same radius of curvature. The radius corresponds essentially to the radius R of curvature of the single curvature shell surface 9. A way of creating geometrical compensated surfaces is more closely described further below. The curvature of the outer surface 11 of the first flange 5 corresponds with the radius of the curvature of the inner shell surface 9.

The stiffening element 1 is manufactured by folding the blank 19 along a the first folding line 13 with a radius of curvature essentially (the wording "curvatures essentially corresponding with each other" cover a feature such that the curvature relationship clearly described below is fulfilled regarding the way of creating geometrical compensated surfaces) corresponding with the radius R of curvature of the single curvature shell surface 9 for forming a fixation flange 5 such that the stiffening element 1 also will have a curvature r in a plane essentially parallel with the shell surface 9 and wherein the web 3 having a radius r of curvature essentially parallel with the radius R.

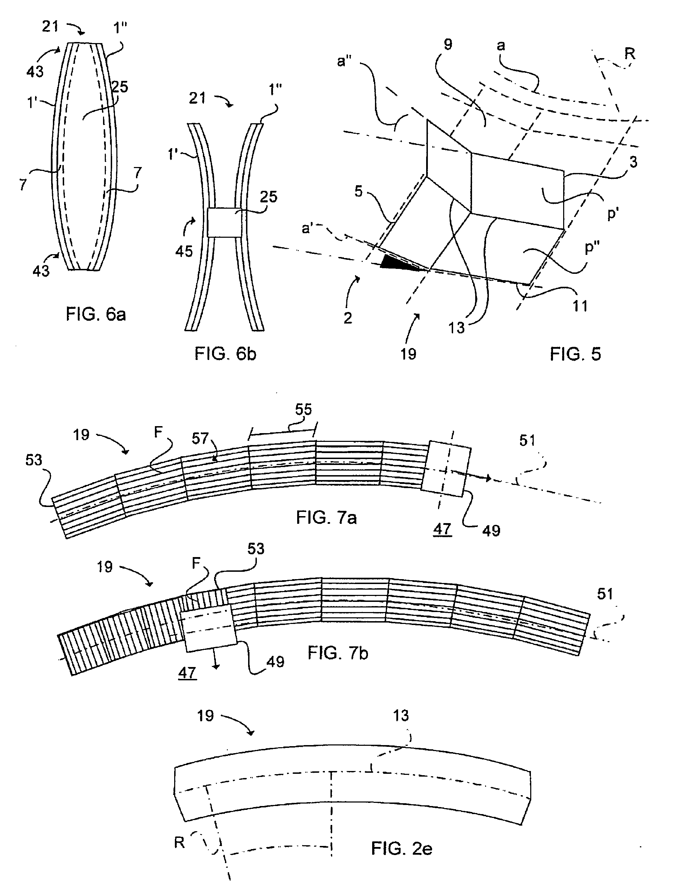

The Z-profile of the stiffening element 1 in FIG. 1a is shown in FIG. 2a. A Ω-shaped profile of a stiffening element 1 is further shown in FIG. 2b. In FIG. 2c is illustrated a L-profile of a stiffening element 1 according to a second embodiment. Both the web 3 and the first flange 5 (fixation flange) have a curvature corresponding essentially with the curvature of the curved shell inner surface, which according to this embodiment corresponds with a moderate double curved surface 9', seen in a direction transverse to the surface. FIG. 2d shows schematically a flattened Ω-profile of a stiffening element structure 21 (also shown in FIG. 6a). The moderate double curved surface 9' comprises surfaces including surfaces with double curvature small enough such that it is possible to wrap a flat blank (lay-up of plastic) on a tool surface without wrinkling the blank. Fig. 2e shows a flat blank 19 provided for a stiffening element 1 with the profile shown in FIG. 2c.

FIG. 3a illustrates an aircraft door 23 (a panel) including the embodiment shown in FIG. 1 forming a stiffening element structure 21. To the door shell inner surface 9 are attached eight stiffening elements 1 by means of glue (may also be welded, riveted or screwed). An arrangement of in pairs placed stiffening elements 1', 1 " stiffens the curved shell surface 9 of the door 23. Each pair comprises a first stiffening element 1' arranged adjacent a second stiffening element 1". The inner flanges 7 of each pair are faced towards each other. Each pair constitutes the stiffening element structure 21. FIG. 3b shows the aircraft door 23 in a side view. Notably is the small building height h of the stiffening element 1 relative the radius R of the curvature of the shell surface 9. A bracing means 25 (a cross bar) is attached (provided) between the stiffening elements 1', 1" forming the stiffening element structure 21,

FIG. 4 illustrates a part of a forming tool 27 comprising a forming surface 29. The forming tool 27 includes a male forming part 28 and a female forming part 31. The stiffening element forming surface 29 of the male forming part 28 and the female forming part 31 respectively comprises a first folding (curving) line 33. The blank 19 (see FIG. 1b) is to be applied between the forming surfaces 29 of male and female forming parts of the forming tool 27. The first folding edge 33 is formed for providing the first folding line 13 at the blank 19. The first folding edge 33 has a folding direction alteration in the first and second plane in a similar way as being described above. That is, an intersection line can be defined corresponding to an extension between the curved shell surface 9 and the same surface imaginary rotated with a desired angle, wherein said angle corresponds to a desired angel of the web 3 of the stiffening element for manufacturing. The intersection line equals the three-dimensional folding edge 33 (corresponding with the first folding line 13) for folding a flat blank of plastic into said stiffening element. The curved shell surface is in this embodiment a single curved shell surface 9. The blank 19 is formed and folded along the first folding edge 33 in the first p' and second p" plane. The first folding edge 33 has in the first plane p' a varying folding direction essentially corresponding with the curvature of the curved shell surface 9. The first folding edge 33 has in the second plane p" a varying folding direction corresponding with the folding curvature in the first plane p'. The same relationship is valid for a second folding edge 35. That is, the curvature of the first folding edge 33 is the same as the curvature (that is; parallel with) of the second folding edge 35. A web forming surface 37 and an outer 39 and inner 41 flange forming surface of the forming tool 27 hold and guide the blank 19 during the folding procedure and accomplish the forming of the web 3, the outer flange 5 and the inner flange 7 of the stiffening element 1.

Thereafter the completely formed blank 19 is cured for achieving the finished stiffening element 1. The procedure is as follows: The completely folded blank 19 is sealed in a vacuum bag (not shown). Thereafter air is evacuated from the vacuum bag. Thereafter the completely folded blank 19 is heated by means of heating means (not shown). Thereafter it is cooled and being stripped from the vacuum bag. The stiffening element 1 is ready for attachment, after it has been removed from the forming tool 27, to the single curved shell surface 9.

The blank 19 may be cured in an autoclave (not shown) for compressing the completely formed blank 19 so that eventual air pockets between the plastic layers can be minimized and limited to a certain predetermined extension.

FIG. 5 illustrates schematically in a perspective view a stiffening element 2 according to a third embodiment of the present invention. The stiffening element 2 of this embodiment is manufactured of a blank 19 of plastic without reinforcement fibres. The blank 19 prior folding was square-shaped. The stiffening element 2 comprises a first folding line 13 between a web 3 and a flange 5. The first folding line 13 has a folding direction alteration in a first p' and a second p" plane. The first folding line 13 in the first plane p' has a varying folding direction a' corresponding essentially with the curved shell surface 9. Furthermore, the first folding line 13 has in the second plane p" a varying folding direction a" corresponding with the varying folding direction a' in the first plane p'. The varying folding direction a corresponds essentially with the mean radius R of the curved shell surface 9 and corresponds essentially with a' and a".

FIG. 6a illustrates a further stiffening element structure 21. Two stiffening elements 1', 1" are provided adjacent with their ends 43 nearest each other. The inner flanges of each pair of stiffening elements are faced towards each other and a bracing means 25 (a plate) is attached to the inner flanges 7. FIG. 6b illustrates a further stiffening element structure 21. Two stiffening elements 1', 1" are provided adjacent with their waists 45 nearest each other. A bracing plate 25 connects the two stiffening elements 1', 1". The bracing plate in FIG. 6b is lighter (less weight) than that shown in FIG. 6a.

FIG. 7a and 7b illustrate two working stages of a method of providing the substantial flat blank 19 of plastic layers by means of an automatic tape laying machine 47 (ATLM). In the FIG. 7a is schematically shown a prepreg tape reel arrangement 49 being moved in an direction essentially parallel (or along the 0-line) with the extension line 51 of the blank 19. A reel arrangement 49 applies a prepreg tape 53 in sections 55 in a first layer. Reinforcement elements 57 (glass fibres) are schematically marked with lines F. In FIG. 7b is schematically shown the prepreg tape reel arrangement 49 in another position for laying prepreg tape 53 onto the first layer with a 90 degrees change. That is, the reinforcement fibres of the now applied plastic layer will have a 90 degrees altered direction relative the previous applied layer.

The automatic tape laying machine 47 in FIGS 7a and 7b has provided the blank 19 in FIG. 1b including 8 plastic layers (not shown). The fibre orientation is 0, 90, +45, -45, -45, +45, 90 and 0 degrees. Other blanks may have up to 120 layers.

In the following is described a way of creating geometrical compensated surfaces. FIG. 8a shows schematically a curvature 109 of an imaginary surface 108. The imaginary surface 108 is shown in FIG. 8b.

In FIG. 8b is also shown (for definition of curvature relationship) desired first and second point 110, 111 on the imaginary surface 108. A rotation line 112 connects the first and second points 110, 111.

A rotation of the imaginary surface 108 with a desired angle 113 around the rotation line 112 generates a rotated imaginary surface 114. The intersection between the imaginary surface 108 and the rotated imaginary surface 114 is marked with a dotted intersection line 115. The intersection line 115 equals a three-dimensional folding line for folding the flat lay-up (the flat blank 19) for creating a fixation flange (first flange 5) and the web 3, the fixation flange has a curvature corresponding with the curvature of the curved shell surface 9.

In FIG. 8d is shown the curvature 109 of the imaginary surface 108 with the first and second points 110, 111, between the points is defined the straight rotation line 112. To create an upper flange a midpoint 116 is defined on the rotation line 112 and between the first and second point 110, 111. The midpoint 116 is projected on the imaginary surface 108 creating a first projection point 117 normal to the rotation line 112. This first projecting point 117 is thereafter translated normal to the imaginary surface 108, wherein a desired length of the web creates a second point 118. The imaginary surface 108 is thereby transformed from the first projections point 117 to the second point 118 creating the flange surface 119.

The intersection curve between the flange surface 119 and a web surface 120 can be altered slightly to give new characteristics to the flange in respect to a local angle 113', the flange height H and other characteristics, although these characteristics are connected thereto. For example, the flange surface 119 may correspond with a surface such as the single curved shell surface 9 in FIG. 1 a or a moderate double curved surface. Such a moderate double curved surface is defined as surfaces with double curvature small enough to make it possible to wrap a flat lay-up on surface without wrinkling.

The present invention is of course not in any way restricted to the preferred embodiments described above, but many possibilities to modifications or combinations of the described embodiments thereof should be apparent to a person with ordinary skill in the art without departing from the basic idea of the invention as defined in the appended claims. The plastic can be thermo setting plastic, epoxy resins, thermoplastics, polyester resins, fibreglass reinforced plastics etc.

The word folding in the present application can be replaced by the words bending, curving etc. Folds along the folding lines of the stiffening element are understood to be provided essentially rounded, also where the figures show sharp folds or sharp folds. Of course, the second folding line can be modified in different ways in respect to the first folding line. For example, the first folding line must not have the same radius of curvature, but can be slightly changed in respect to the first folding line, thereby achieving that the web will have different angles relatively to the plane of the shell surface. This is advantageously when manufacturing other surfaces than single curved shell surfaces with stiffening elements, such as stiffening moderate double curved shell surfaces with stiffening elements.

The invention is particularly, but not exclusively, applicable to larger aircraft such as passenger carrying aircraft or freight carrying aircraft.

## Claims

1. A method for manufacturing of a stiffening element (1, 1', 1", 2) of composite material, which stiffening element is provided for attachment to a curved shell surface (9), said stiffening element (1, 1', 1 ", 2) comprises a web (3) and at least one flange (5), the outer surface (11) of which has a radius (R) of curvature corresponding with the curvature of said curved shell surface (9), the method comprises the following steps of:
- providing a substantial flat blank (19) of composite material;
- folding said blank (19) along a first folding line (13), the curvature of which is defined by an imaginary three-dimensional intersection line (115) being derived from the radius (R) of curvature of the curved shell surface (9); wherein the method also comprises the step of
- folding the blank (19) along a second folding line (15) essentially parallel with the first folding line (13) for forming an inner flange (7).

2. A method according to claim 1, the method comprises the following steps of:
- providing a substantial flat blank (19) of composite material;
- applying said blank (19) on a forming surface (29) of a forming tool (27);
- folding said blank (19) along a first folding line (13), the curvature of which is defined by an imaginary three-dimensional intersection line (115) being derived from the radius (R) of curvature of the curved shell surface (9);
- curing said folded blank (19); and
- removing the stiffening element (1, 1', 1 ", 2) from the forming tool (27).

3. A method according to claim 1 or 2, **wherein** the step of curing the folded blank (19) is performed by:
- sealing the folded blank (19) in a vacuum bag;
- evacuating air from said vacuum bag;
- heating the folded blank (19) by means of heating means;
- cooling the folded blank (19); and
- removing the finished stiffening element (1, 1', 1", 2) from the vacuum bag.

4. A method according to any of claim 1-3, **wherein** the method of curing the folded blank (19) comprises the step of:
- compressing the blank (19) in an autoclave.

5. A method according to any one of the preceding claims, **wherein** the method of providing the blank (19) of composite material is performed by an automatic tape laying machine (47), which comprises a moveable reel arrangement (49) for applying layers including elongated reinforcement elements (57) onto an essential flat surface side-by-side and on top of each other.

6. A method according to any one of the preceding claims, **wherein** the curved shell surface is a single curved shell surface.

7. A method according to any of claims 1-5, **wherein** the curved shell surface is a moderate double curved shell surface.

8. A method according to any of claims 1-4, **wherein** the method of providing the blank (19) of composite material is performed by hand onto an essential flat surface.

9. A method according to any one of the preceding claims, **wherein** the method of providing the essential flat blank (19) of composite material is performed in such way that the mean extension line (51) of the blank (19) will have a curvature (C) essentially corresponding with the curved shell surface (9).

10. A stiffening element of composite material, **wherein** said element (1, 1', 1", 2) is obtainable by the method according to any one of claim 1-9.

11. A stiffening element according to claim 10, **wherein** the stiffening element comprises reinforcement fibres being unbroken in the direction of curvature for each layer reinforcement fibres extend continuously unbroken in the direction of curvature for each layer.

12. A stiffening element structure (21), **wherein** a first stiffening element (1') is arranged near a second stiffening element (1"), a bracing means (25) is connecting the stiffening elements (1', 1 "), said stiffening elements (1', 1") are defined in any one of claim 10 and 11.

13. A curved shell panel (23) comprising a curved shell inner surface (9), and at least two stiffening elements (1,1', 1 ", 2) according to any one of claim 10 and 11 being attached to said curved shell inner surface (9).

14. A curved shell panel (23) according to claim 13, **wherein** the stiffening elements are arranged in such way as being claimed in claim 12.

15. A method for manufacturing of a curved shell panel (23) comprising at least two stiffening elements (1, 1', 1 ", 2) of composite material being attached to a curved shell surface (9) of the panel (23), the method comprises the following steps of:
- providing a curved shell panel blank;
- providing a substantial flat blank (19) of composite material;
- folding said blank (19) according to any one of claim 1-9; and
- attaching the at least two stiffening elements (1, 1', 1", 2) to the curved shell surface (9) of the shell panel blank.

16. A method according to claim 15, **wherein** the surface of the curved shell panel (23) is a moderate double curved surface.

## Patentansprüche

1. Verfahren zum Herstellen eines Versteifungselements (1, 1', 1", 2) aus Verbundmaterial, welches Versteifungselement zum Anbringen an einer gekrümmten Hüllenoberfläche (9) vorgesehen ist, wobei das Versteifungselement (1, 1', 1", 2) einen Steg (3) und zumindest einen Kragen (5) umfasst, dessen äußere Oberfläche (11) einen Krümmungsradius (R) entsprechend der Krümmung der gekrümmten Hüllenoberfläche (9) aufweist, wobei das Verfahren die folgenden Schritte umfasst:
Schaffen eines im Wesentlichen flachen Rohlings (19) aus Verbundmaterial;
Falten des Rohlings (19) entlang einer ersten Faltungslinie (13), deren Krümmung durch eine imaginäre, dreidimensionale Schnittlinie (115) definiert wird, die vom Krümmungsradius (R) der gekrümmten Hüllenoberfläche (9) abgeleitet wird; wobei das Verfahren ferner den Schritt des
Faltens des Rohlings (19) entlang einer zweiten Faltungslinie (15), die im Wesentlichen parallel zu der ersten Faltungslinie (13) verläuft, zum Ausbilden eines inneren Kragens (7) umfasst.

2. Verfahren nach Anspruch 1, wobei das Verfahren die folgenden Schritte umfasst:
Schaffen eines im Wesentlichen flachen Rohlings (19) aus Verbundmaterial;
Auflegen des Rohlings (19) auf eine Formoberfläche (29) eines Formwerkzeugs (27);
Falten des Rohlings (19) entlang einer ersten Faltungslinie (13), deren Krümmung durch eine imaginäre, dreidimensionale Schnittlinie (115) definiert ist, die vom Krümmungsradius (R) der gekrümmten Hüllenoberfläche (9) abgeleitet wird;
Aushärten des gefalteten Rohlings (19); und
Entfernen des Versteifungselements (1, 1', 1", 2) von dem Formwerkzeug (27).

3. Verfahren nach Anspruch 1 oder 2, **wobei** der Schritt des Aushärtens des gefalteten Rohlings (19) durchgeführt wird durch:
Abdichten des gefalteten Rohlings (19) in einen Vakuumsack;
Abpumpen von Luft aus dem Vakuumsack;
Erhitzen des gefalteten Rohlings (19) durch Heizungsmittel;
Kühlen des gefalteten Rohlings (19); und
Entfernen des fertigen Versteifungselements (1, 1', 1", 2) aus dem Vakuumsack.

4. Verfahren nach einem der Ansprüche 1 bis 3, **wobei** das Verfahren des Aushärtens des gefalteten Rohlings (19) den Schritt des Zusammenpressens des Rohlings (19) in einem Autoklav umfasst.

5. Verfahren nach einem der vorstehenden Ansprüche, **wobei** das Verfahren des Schaffens des Rohlings (19) aus Verbundmaterial durch eine automatische Bandlegemaschine (47) durchgeführt wird, die eine bewegliche Bandrollenanordnung (49) zum Auflegen von Schichten, auch länglicher Verstärkungselemente (57), auf eine im Wesentlichen flache Oberfläche, nebeneinander und aufeinander, umfasst.

6. Verfahren nach einem der vorstehenden Ansprüche, **wobei** die gekrümmte Hüllenoberfläche eine einzeln gekrümmte Hüllenoberfläche ist.

7. Verfahren nach einem der Ansprüche 1 bis 5, **wobei** die gekrümmte Hüllenoberfläche eine moderate, doppelt gekrümmte Hüllenoberfläche ist.

8. Verfahren nach einem der Ansprüche 1 bis 4, **wobei** das Verfahren des Schaffens des Rohlings (19) aus Verbundmaterial von Hand auf eine im Wesentlichen flache Oberfläche durchgeführt wird.

9. Verfahren nach einem der vorstehenden Ansprüche, **wobei** das Verfahren des Schaffens des im Wesentlichen flachen Rohlings (19) aus Verbundmaterial derart durchgeführt wird, dass die mittlere Ausdehnungslinie (51) des Rohlings (19) eine Krümmung (C) aufweisen wird, die im Wesentlichen mit der gekrümmten Hüllenoberfläche (9) korrespondiert.

10. Versteifungselement aus Verbundmaterial, **wobei** das Element (1, 1', 1", 2) durch das Verfahren nach einem der Ansprüche 1 bis 9 erhältlich ist.

11. Versteifungselement nach Anspruch 10, **wobei** das Versteifungselement Verstärkungsfasern umfasst, die in der Krümmungsrichtung für jede Schicht ununterbrochen sind, wobei sich die Verstärkungsfasern durchgehend, ununterbrochen in der Krümmungsrichtung für jede Schicht erstrecken.

12. Versteifungselementstruktur (21), **wobei** ein erstes Versteifungselement (1') nahe einem zweiten Versteifungselement (1") angeordnet ist und ein Klammermittel (25) die Versteifungselemente (1', 1") verbindet, wobei die Versteifungselemente (1', 1") in einem der Ansprüche 10 und 11 definiert sind.

13. Gekrümmtes Hüllenpaneel (23), umfassend eine gekrümmte innere Hüllenoberfläche (9) und zumindest zwei Versteifungselemente (1, 1', 1", 2), nach einem der Ansprüche 10 und 11, die an der inneren gekrümmten Hüllenoberfläche (9) angebracht sind.

14. Gekrümmtes Hüllenpaneel (23) nach Anspruch 13, **wobei** die Versteifungselemente derart angeordnet sind, wie in Anspruch 12 beansprucht ist.

15. Verfahren zur Herstellung eines gekrümmten Hüllenpaneels (23), umfassend zumindest zwei Versteifungselemente (1, 1', 1", 2) aus Verbundmaterial, die an einer gekrümmten Hüllenoberfläche (9) des Paneels (23) angebracht sind, wobei das Verfahren die folgenden Schritte umfasst:
Schaffen eines gekrümmten Hüllenpaneelrohlings;
Schaffen eines im Wesentlichen flachen Rohlings (19) aus Verbundmaterial;
Falten des Rohlings (19) nach einem der Ansprüche 1 bis 9; und
Anbringen der zumindest zwei Versteifungselemente (1, 1', 1", 2) an der gekrümmten Hüllenoberfläche (9) des Hüllenpaneelrohlings.

16. Verfahren nach Anspruch 15, **wobei** die Oberfläche des gekrümmten Hüllenpaneels (23) eine moderate, doppelt gekrümmte Oberfläche ist.

## Revendications

1. Méthode pour la fabrication d'un élément de raidissement (1, 1', 1", 2) de matériau composite, lequel élément de raidissement est fourni pour l'attachement à une surface de coque incurvée (9), ledit élément de raidissement (1, 1', 1", 2) comprend une toile (3) et au moins une bride (5), la surface extérieure (11) de laquelle a un rayon (R) de courbure correspondant à la courbure de ladite surface de coque incurvée (9), la méthode comprend les étapes consistant à :
- fournir une ébauche sensiblement plate (19) de matériau composite ;
- plier ladite ébauche (19) le long d'une première ligne de pliage (13), dont la courbure est définie par une ligne d'intersection tridimensionnelle imaginaire (115) qui est dérivée du rayon (R) de courbure de la surface de coque incurvée (9) ;
dans laquelle la méthode comprend également l'étape consistant à :
- plier l'ébauche (19) le long d'une deuxième ligne de pliage (15) sensiblement parallèle à la première ligne de pliage (13) pour former une bride intérieure (7).

2. Méthode selon la revendication 1, la méthode comprenant les étapes consistant à :
- fournir une ébauche sensiblement plate (19) de matériau composite ;
- appliquer ladite ébauche (19) sur une surface de formage (29) d'un outil de formage (27) ;
- plier ladite ébauche (19) le long d'une première ligne de pliage (13), dont la courbure est définie par une ligne d'intersection tridimensionnelle imaginaire (115) qui est dérivée du rayon (R) de courbure de la surface de coque incurvée (9) ;
- durcir ladite ébauche pliée (19) ; et
- enlever l'élément de raidissement (1, 1', 1" , 2) de l'outil de formage (27).

3. Méthode selon la revendication 1 ou 2, dans laquelle l'étape de durcissement de l'ébauche pliée (19) est effectuée en :
- scellant l'ébauche pliée (19) dans un sac sous vide ;
- évacuant l'air dudit sac sous vide ;
- chauffant l'ébauche pliée (19) par des moyens de chauffage ;
- refroidissant l'ébauche pliée (19) ; et
- enlevant l'élément de raidissement fini (1, 1', 1", 2) du sac sous vide.

4. Méthode selon l'une quelconque des revendications 1 à 3, dans laquelle la méthode de durcissement de l'ébauche pliée (19) comprend l'étape consistant à :
- compresser l'ébauche (19) dans un stérilisateur.

5. Méthode selon l'une quelconque des revendications précédentes, dans laquelle le procédé consistant à fournir l'ébauche (19) de matériau composite est effectué par une machine automatique de pose de bande (47), qui comprend un agencement de dévidoir mobile (49) pour appliquer des couches comprenant des éléments de renforcement allongés (57) sur une surface sensiblement plate côte à côte et l'une sur l'autre.

6. Méthode selon l'une quelconque des revendications précédentes, dans laquelle la surface de coque incurvée est une surface de coque incurvée unique.

7. Méthode selon l'une quelconque des revendications 1 à 5, dans laquelle la surface de coque incurvée est une surface de coque incurvée double modérée.

8. Méthode selon l'une quelconque des revendications 1 à 4, dans laquelle la méthode consistant à fournir l'ébauche (19) de matériau composite est effectuée à la main sur une surface sensiblement plate.

9. Méthode selon l'une quelconque des revendications précédentes, dans laquelle la méthode consistant à fournir l'ébauche sensiblement plate (19) de matériau composite est effectuée de manière à ce que la ligne d'extension moyenne (51) de l'ébauche (19) ait une courbure (C) correspondant sensiblement à la surface de coque incurvée (9).

10. Elément de raidissement de matériau composite,
dans lequel ledit élément (1, 1', 1", 2) peut être obtenu par la méthode selon l'une quelconque des revendications 1 à 9.

11. Elément de raidissement selon la revendication 10, dans lequel l'élément de raidissement comprend des fibres de renforcement étant non cassées dans la direction de courbure pour chaque couche, les fibres de renforcement s'étendant continuellement non cassées dans la direction de courbure pour chaque couche.

12. Structure d'élément de raidissement (21), dans lequel un premier élément de raidissement (1') est agencé à proximité d'un deuxième élément de raidissement (1"), un moyen d'armature (25) connecte les éléments de raidissement (1', 1"), lesdits éléments de raidissement (1', 1") sont définis selon l'une quelconque des revendications 10 et 11.

13. Panneau de coque incurvée (23) comprenant une surface intérieure de coque incurvée (9), et au moins deux éléments de raidissement (1, 1', 1", 2) selon l'une quelconque des revendications 10 et 11 étant attachés à ladite surface intérieure de coque incurvée (9).

14. Panneau de coque incurvée (23) selon la revendication 13, dans lequel les éléments de raidissement sont agencés selon la revendication 12.

15. Méthode de fabrication d'un panneau de coque incurvée (23) comprenant au moins deux éléments de raidissement (1, 1', 1", 2) de matériau composite étant attachés à une surface de coque incurvée (9) du panneau (23), la méthode comprend les étapes consistant à :
- fournir une ébauche de panneau de coque incurvée ;
- fournir une ébauche sensiblement plate (19) de matériau composite ;
- plier ladite ébauche (19) selon l'une quelconque des revendications 1 à 9 ; et
- attacher les au moins deux éléments de raidissement (1, 1', 1", 2) à la surface de coque incurvée (9) de l'ébauche de panneau de coque.

16. Méthode selon la revendication 15, dans laquelle la surface du panneau de coque incurvée (23) est une surface incurvée double modérée.
